(19) Europäisches Patentamt
European Patent Office
Office européen des brevets

(11) **EP 0 982 482 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(51) Int Cl.[7]: **F02C 6/12**, F01D 17/14

(21) Anmeldenummer: **99116206.6**

(22) Anmeldetag: **17.08.1999**

(54) **Abgasturbolader**

Turbocharger

Turbosoufflante

(84) Benannte Vertragsstaaten:
**DE ES FR GB IT**

(30) Priorität: **26.08.1998 DE 19838754**

(43) Veröffentlichungstag der Anmeldung:
**01.03.2000 Patentblatt 2000/09**

(73) Patentinhaber: **DaimlerChrysler AG**
**70567 Stuttgart (DE)**

(72) Erfinder:
• **Daudel, Helmut**
**73614 Schondorf (DE)**
• **Sumser, Siegfried**
**70184 Stuttgart (DE)**

(56) Entgegenhaltungen:
DE-A- 19 615 237     DE-C- 4 330 487
US-A- 4 403 913      US-A- 4 565 505
US-A- 4 776 168      US-A- 4 894 990

**Beschreibung**

Die Erfindung betrifft einen Abgasturbolader für eine Brennkraftmaschine nach dem Oberbegriff des Anspruches 1.

Aus der DE 43 30 487 C1 ist bereits ein Abgasturbolader für eine Brennkraftmaschine bekannt, dessen Abgasturbine ein Laufrad mit einem halbaxialen und einem radialen Strömungseintrittsquerschnitt aufweist. Im Bereich des halbaxialen Strömungseintrittsquerschnitts ist ein starres Leitgitter angeordnet, im Bereich des radialen Strömungseintrittsquerschnitts dagegen ein Leitgitter mit verstellbaren Leitschaufeln, über die die Fläche des radialen Strömungseintrittsquerschnitts in Abhängigkeit der Leitschaufelstellung variiert werden kann.

Im Anfahrbetrieb wird das radiale Leitgitter in Sperrstellung versetzt, so daß die radiale Zuströmung zum Laufrad gesperrt ist und der Abgasmassenstrom durch den halbaxialen Strömungseintrittsquerschnitt zum Laufrad strömt und in einem strömungstechnisch günstigen Winkel auf das Laufrad trifft. Im Teillast- und Vollastbereich wird das radiale Leitgitter geöffnet, so daß ein höherer Anteil des Abgasmassenstroms durch den radialen Strömungseintrittsquerschnitt strömt.

Die über das einstellbare radiale Leitgitter realisierte variable Turbinengeometrie kann im Motorbremsbetrieb zur Erhöhung der Bremsleistung eingesetzt werden. Hierbei werden die Leitschaufeln in Staustellung versetzt, was zum Aufbau eines hohen Abgasgegendrucks führt. Zugleich strömt Abgas mit hoher Geschwindigkeit durch die Kanäle zwischen den Leitschaufeln bzw. durch den halbaxialen Strömungsquerschnitt und beaufschlagt das Turbinenrad, wodurch auch die Verdichterleistung gesteigert und die dem Motor zugeführte Verbrennungsluft vom Verdichter unter Überdruck gesetzt wird.

Dadurch wird der Zylinder eingangsseitig mit erhöhtem Ladedruck beaufschlagt, ausgangsseitig liegt zwischen dem Zylinderauslaß und dem Abgasturbolader ein Überdruck an, der dem Abblasen der im Zylinder verdichteten Luft über Dekompressionsventile in den Abgasstrang hinein entgegenwirkt. Im Motorbremsbetrieb muß der Kolben im Verdichtungs- und Ausschiebehub Kompressionsarbeit gegen den hohen Überdruck im Abgasstrang verrichten, wodurch eine starke Bremswirkung erreicht wird.

Zum weiteren Stand der Technik wird ergänzend auf die Druckschriften DE 196 15 237 A1, WO 84/04136 und die nachveröffentlichte DE 197 27 140 C1 verwiesen.

Der Erfindung liegt das Problem zugrunde, den Wirkungsgrad eines gattungsgemäßen Abgasturboladers in einem breiten Betriebsbereich zu verbessern.

Dieses Problem wird erfindungsgemäß mit den Merkmalen des Anspruches 1 gelöst.

Beim befeuerten Betrieb von Abgasturbinen muß berücksichtigt werden, daß ein großer Turbinenrad-Durchmesser Wirkungsgradvorteile im oberen Motor-Drehzahlbereich bringt. Mögliche Nachteile großer Turbinenrad-Durchmesser hinsichtlich Kraftstoffverbrauch, die durch die größere Trägheit des Laufrades entstehen können, werden durch die Aufstaumöglichkeit des variablen Leitgitters überkompensiert. Es hat sich gezeigt, daß bei einem Verhältnis des Verdichterrad-Durchmessers zum Turbinenrad-Durchmesser von maximal 1.1 die Vorteile eines großen Turbinenrad-Durchmessers bei weitem überwiegen.

Für die Berechnung des Verhältnisses von Verdichterrad zu Turbinenrad wird zunächst ein Durchschnittswert für den Turbinenrad-Durchmesser ermittelt. In die Berechnung des Durchschnittswerts fließen in unterschiedlicher Gewichtung der halbaxiale Turbinen-Eintrittsdurchmesser und der radiale Turbinen-Eintrittsdurchmesser ein, wobei für die Gewichtung dieser beiden Komponenten das Verhältnis der Fläche des radialen Strömungseintrittsquerschnitts zur Summe aus halbaxialem und radialem Strömungseintrittsquerschnitt herangezogen wird. Der halbaxiale bzw. radiale Strömungseintrittsquerschnitt entspricht der Leitgitter-Austrittsfläche in der halbaxialen bzw. radialen Zuströmung. Der mittlere Turbinenrad-Durchmesser wird anschließend der Berechnung des Verhältnisses von Verdichterrad zu Turbinenrad zugrunde gelegt.

Der Maximalwert des Verhältnisses von Verdichterrad zu Turbinenrad wird erreicht, wenn der mittlere Turbinenrad-Durchmesser minimal wird. Dies ist der Fall, wenn der größere Anteil des Abgasmassenstromes durch diejenige Zuströmung mit geringerem radialen Abstand zur Turbinenachse - in der Regel die halbaxiale Zuströmung - geleitet wird. Umgekehrt wird der Minimalwert des Verhältnisses von Verdichterrad zu Turbinenrad erreicht, wenn der mittlere Turbinenrad-Durchmesser maximal wird, was üblicherweise bei bevorzugter radialer Zuströmung der Fall ist.

Der Durchschnittswert des Turbinenrad-Durchmessers ist keine konstante Größe, sondern kann aufgrund der variablen Gewichtungsfaktoren je nach Stellung der variablen Turbinengeometrie Werte zwischen einem Maximalwert und einem Minimalwert variieren. Demnach kann über die variable Turbinengeometrie der Durchschnittswert des Turbinenrad-Durchmessers eingestellt werden. Der Minimalwert des Verhältnisses von Verdichterrad zu Turbinenrad darf erfindungsgemäß den Wert 1.1 nicht überschreiten, was bedeutet, daß der Turbinenrad-Durchmesser im Verhältnis zum Verdichterrad-Durchmesser eine Mindestgröße aufweisen muß.

Dadurch kann die Turbine eines Abgasturboladers mit variabel einstellbarer Geometrie optimal gemäß den Kriterien Wirkungsgradverbesserung und Verbrauchsreduzierung eingestellt werden. Aufgrund der Variabilität des Turbinenrad-Durchmessers kann anstelle eines einzelnen Betriebspunktes nunmehr ein Betriebsbereich abgedeckt werden, der bei kleiner Last und Drehzahl in Richtung eines günstigeren Kraftstoffverbrauches verschoben ist und im Teillast- und Vollastbereich im Bereich des optimalen Wirkungsgrades liegt.

Wegen der Variabilität des mittleren Turbinenrad-Durchmessers kann man auch von einem quasi-variablen Turbinenrad sprechen, das die gleichen Eigenschaften aufweist wie ein Turbinenrad, dessen Durchmesser physikalisch veränderlich einstellbar ist, ohne jedoch mit der komplizierten Geometrie und Kinematik eines veränderlichen Turbinenrades ausgestattet zu sein. Dem mittleren Turbinenrad-Durchmesser kommt die Bedeutung eines hypothetischen Durchmessers zu, dessen Variation durch eine unterschiedlich starke halbaxiale bzw. radiale Anströmung erfolgt.

Die Berechnung des Durchschnittswerts des Turbinenrad-Durchmessers ist unabhängig von der Wahl der variablen Turbinengeometrie. Sowohl bei Verwendung eines radialen Leitgitters mit verstellbaren Leitschaufeln als auch bei Verwendung eines Axialschiebers im halbaxialen Turbineneintritt oder bei Verwendung beider vorgenannter Sperreinrichtungen kann die Beziehung für den Durchschnittswerts des Turbinenrad-Durchmessers herangezogen werden und der Ermittlung des Verhältnisses von Verdichterrad-Durchmesser zu Turbinenrad-Durchmesser zugrunde gelegt werden. Gegebenenfalls kann auch eine Klappenturbine eingesetzt werden.

Bei einem vorzugsweise gewählten Minimalwert von mindestens 0.9, jedoch kleiner als 1.0 und einem Maximalwert von höchstens 1.2 kann das Verhältnis von Verdichterrad-Durchmesser zu Turbinenrad- Durchmesser in einer Bandbreite zwischen mindestens 0.9 und maximal 1.2 variiert werden. Diese Bandbreite überstreicht das Wirkungsgradmaximum der Turbine.

Wird der Minimalwert auf kleiner als 1.0 gesetzt, ist der hypothetische Turbinenrad-Durchmesser in der diesem Minimalwert entsprechenden Stellung der Sperreinrichtung der variablen Turbinengeometrie größer als der Verdichterrad-Durchmesser. Der durchschnittliche Durchmesser des Turbinenrades übersteigt den Durchmesser des Verdichterrades.

Über die Sperreinrichtung der variablen Turbinengeometrie können die Abgasmassenströme zum Turbinenlaufrad eingestellt werden. Je nach Sperreinrichtung und Stellung der Sperreinrichtung strömen unterschiedlich hohe Massenströme über die halbaxiale Zuströmung bzw. die radiale Zuströmung zum Laufrad. Die Massenströme können zusätzlich durch das Verhältnis der halbaxialen und radialen Strömungseintrittsquerschnitte beeinflußt werden. Als vorteilhaft hat sich ein Verhältnis von 0.1 des halbaxialen zum radialen Strömungseintrittsquerschnitt bei offenstehendem Leitgitter erwiesen, da bei diesem Verhältnis die halbaxiale Zuströmung einen engen Querschnitt aufweist und bereits bei geringen Abgasgegendrücken relativ hohe Strömungsgeschwindigkeiten in der halbaxialen Ringdüse erreicht werden können.

Wird ein radiales Leitgitter mit verstellbaren Leitschaufeln im Bereich der radialen Zuströmung als variable Turbinengeometrie eingesetzt, so wird der Maximalwert des Verhältnisses von Verdichterrad zu Turbinenrad zweckmäßig bei geschlossenem Leitgitter, der Minimalwert bei geöffnetem Leitgitter erreicht.

Gleiches gilt für den Einsatz eines Axialschiebers im Bereich der radialen Zuströmung.

In einer anderen vorteilhaften Ausführung kann aber auch eine Sperrvorrichtung im Bereich der halbaxialen Zuströmung verwendet werden, wobei in diesem Fall der Maximalwert bei geöffneter Sperrvorrichtung und der Minimalwert bei geschlossener Sperrvorrichtung erreicht wird.

Gegebenenfalls können Sperrvorrichtungen sowohl in der halbaxialen Zuströmung als auch in der radialen Zuströmung eingesetzt werden.

Weitere Vorteile und zweckmäßige Ausführungsformen sind den weiteren Ansprüchen, der Figurenbeschreibung und den Zeichnungen zu entnehmen. Es zeigen:

Fig. 1    einen Schnitt durch eine Abgasturbine mit halbaxialer und radialer Zuströmung und mit radialem Leitgitter,

Fig. 2    eine Vorderansicht des Turbinenlaufrads mit radialem Leitgitter,

Fig. 3    einen Schnitt durch eine Abgasturbine mit Axialschieber,

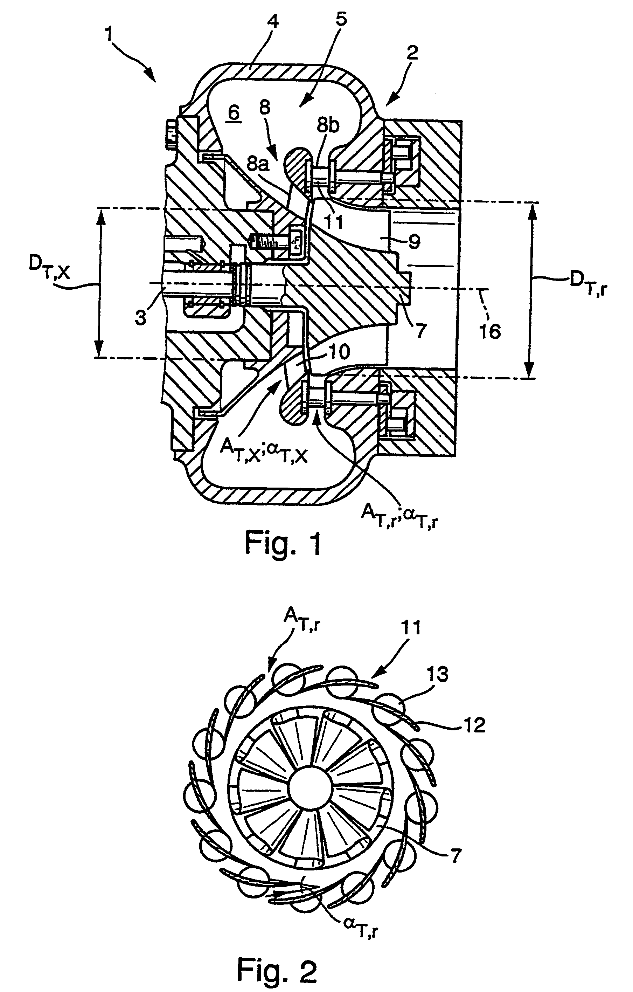

Die in Fig. 1 dargestellte Abgas-Radialturbine 2 eines Abgasturboladers 1 wird von den Abgasen einer Brennkraftmaschine eines Nutzfahrzeugs oder eines Personenkraftwagens angetrieben. Die Bewegung des Turbinenlaufrads 7 wird über eine Welle 3 auf einen Verdichter des Turboladers übertragen, der im Ansaugtrakt plaziert ist und zur Leistungserhöhung der Brennkraftmaschine angesaugte Frischluft auf einen erhöhten Ladedruck verdichtet.

Die Turbine 2 weist ein einflutiges, spiralförmiges Turbinengehäuse 4 auf, in dem ein Strömungskanal 5 mit einer Flut 6 ausgebildet ist. Das Abgas wird über die Flut 6 zu einem ringdüsenförmigen Mündungsbereich 8 mit einer halbaxialen, ringdüsenförmigen Zströ- mung 8a und einer radialen, ringdüsenförmigen Zströ- mung 8b geleitet, wobei die Zuströmungen 8a, 8b den Turbinenschaufeln 9 des Laufrades 7 unmittelbar vor- gelagert angeordnet sind und Strömungseintrittsquer- schnitte $A_{T,x}$ bzw. $A_{T,r}$ aufweisen. Die halbaxiale Zströ- mung 8a ist in einem größeren radialen Abstand zur Turbinenachse 16 angeordnet als die radiale Zuströmung 8b.

In der halbaxialen Zuströmung 8a befindet sich ein Starrgitter 10, in der radialen Zuströmung 8b ist ein variables Leitgitter 11 angeordnet. Der Strömungseintrittsquerschnitt $A_{T,x}$ im Bereich der halbaxialen Zströ- mung 8a ist konstant und unveränderlich, wohingegen der Strömungseintrittsquerschnitt $A_{T,r}$ im Bereich der radialen Zuströmung 8b in Abhängigkeit der Stellung des Leitgitters 11 variiert. Die Strömungseintrittsquerschnitte $A_{T,x}$ und $A_{T,r}$ entsprechen den Austrittsflächen von Starrgitter 10 und Leitgitter 11. In Sperrstellung des radialen Leitgitters 11 - bei vollständig blockierter Strömung durch die radiale Zuströmung 8b - ist der radiale Strömungseintrittsquerschnitt $A_{T,r}$ Null. In Öffnungsstellung des radialen Leitgitters 11 nimmt der radiale Strömungseintrittsquerschnitt $A_{T,r}$ ein Maximum ein.

Der halbaxiale Turbinen-Eintrittsdurchmesser $D_{T,x}$ markiert den mittleren Durchmesser der Turbinenschaufeln 9 im Bereich des halbaxialen Strömungseintrittsquerschnitts $A_{T,x}$. Der radiale Turbinen-Eintrittsdurchmesser $D_{T,r}$ bezeichnet den Durchmesser der Turbinenschaufeln 9 im Bereich des radialen Strömungseintrittsquerschnitts $A_{T,r}$. Sowohl der halbaxiale als auch der radiale Turbinen-Eintrittsdurchmesser $D_{T,x}$ bzw. $D_{T,r}$ sind konstante Größen, die von der Wahl der Turbine abhängen, im übrigen aber nicht veränderlich sind.

Aus dem halbaxialen und dem radialen Turbinen-Eintrittsdurchmesser $D_{T,x}$ bzw. $D_{T,r}$ sowie den Strömungseintrittsquerschnitten $A_{T,x}$ und $A_{T,r}$ kann gemäß der Beziehung

$$D_{T,m} = D_{T,x} + (D_{T,r} - D_{T,x})^* A_{T,r} / (A_{T,r} + A_{T,x})$$

ein mittlerer Turbinen-Eintrittsdurchmesser $D_{T,m}$ berechnet werden, der der Berechnung des Verhältnisses $D_v/D_{T,m}$ als Abstimmungsquotient von Verdichter-Austrittsdurchmesser $D_v$ und mittlerem Turbinen-Eintrittsdurchmesser $D_{T,m}$ zugrunde gelegt wird. Aufgrund des variablen radialen Strömungseintrittsquerschnitts $A_{T,r}$ kann je nach Stellung des Leitgitters 11 das Verhältnis $D_v/D_{T,m}$ unterschiedliche Werte einnehmen. Die Durchmesser werden so gewählt, daß der Minimalwert des Verhältnisses von $D_v/D_{T,m}$, der bei geöffnetem radialen Leitgitter 11 erreicht wird, kleiner als 1.1, bei großvolumigen Motoren wie beispielsweise in Nutzfahrzeugen verwendet gegebenenfalls kleiner als 1.0 wird. Dies bedeutet, daß der mittlere, hypothetische Durchmesser des Turbinenlaufrades in der dem Minimalwert entsprechenden Stellung des variablen Leitgitters geringfügig kleiner ist (Minimalwert 1.1) oder sogar größer ist (Minimalwert kleiner 1.0) als der Durchmesser des Verdichterlaufrades. Der Maximalwert des Verhältnisses von $D_v/D_{T,m}$ wird in Sperrstellung des Leitgitters 11 erreicht, in der der radiale Strömungseintrittsquerschnitt $A_{T,r}$ zu Null wird bzw. zu einem Minimum wird und der mittlere Turbinen-Eintrittsdurchmesser $D_{T,m}$ ebenfalls ein Minimum einnimmt. Umgekehrt wird der Minimalwert des Verhältnisses von $D_v/D_{T,m}$ in Öffnungsstellung des Leitgitters 11 erreicht, da nunmehr der radiale Strömungseintrittsquerschnitt $A_{T,r}$ sowie der mittlere Turbinen-Eintrittsdurchmesser $D_{T,m}$ ein Maximum erreichen. Der Minimalwert des Verhältnisses beträgt vorteilhaft mindestens 0.9, der Maximalwert liegt zwischen 1.0 und 1.2. Ein bevorzugter Bereich liegt zwischen 0.98 und 1.09.

Gegebenenfalls kann auch der Maximalwert kleiner als 1.0 sein.

Der Betriebsbereich hängt von der Hubraumgröße der Brennkraftmaschine ab. Bei großvolumigen Nutzfahrzeugen kann der Minimalwert unter 1.0 liegen, bei kleinvolumigen Personenkraftwagen unter 1.1.

Über das verstellbare Leitgitter im Bereich der halbaxialen und/oder radialen Zuströmung 8a, 8b kann das Verhältnis zwischen dem halbaxialen und dem radialen Abgas-Teilstrom zum Laufrad der Turbine eingestellt werden. Da die Turbinendurchmesser $D_{T,x}$ und $D_{T,r}$ in der halbaxialen und der radialen Zuströmung unterschiedlich groß sind, kommt dies einer Durchmesseränderung des Turbinenlaufrades gleich. Die Betriebseigenschaften der Turbine können dadurch im laufenden Betrieb situativ eingestellt werden.

Zweckmäßig beträgt das Verhältnis des halbaxialen zum radialen Strömungseintrittsquerschnitt etwa 0.1, so daß der halbaxiale Strömungseintrittsquerschnitt nur 10 % der Fläche des radialen Strömungseintrittsquerschnitts in Offenstellung des Leitgitters 11 einnimmt. In Sperrstellung des radialen Leitgitters 11 muß der gesamte Abgasstrom durch die halbaxiale Zuströmung 8a fließen, wobei aufgrund des engen Querschnitts dieses Strömungswegs hohe Abgasgeschwindigkeiten erreicht werden, so daß das Abgas mit einem großen Strömungsimpuls auf das Turbinenlaufrad trifft.

Wie Fig. 1 weiterhin zu entnehmen, sind den Strömungseintrittsquerschnitten $A_{T,x}$ und $A_{T,r}$ Gitteraustrittswinkel $\alpha_{T,x}$ bzw. $\alpha_{T,r}$ zugeordnet. Der halbaxiale Gitteraustrittswinkel $\alpha_{T,x}$, der den Winkel bezeichnet, unter dem die Strömung durch das halbaxiale Gitter 10 strömt und auf den Umfang des Laufrades 7 trifft, ist bei Verwendung eines starren Gitters in der halbaxialen Zuströmung 8a unveränderlich.

Der radiale Gitteraustrittswinkel $\alpha_{T,r}$ bezeichnet, wie in Fig. 2 dargestellt, denjenigen Winkel im Bereich des variablen Leitgitters 11, unter dem die Strömung zwischen benachbarten Leitschaufeln 12, die an drehbaren Leitwellen 13 befestigt sind, gegenüber einer Tangenten zum Umfang des Laufrades 7 einströmt. Je nach Stellung der Leitschaufeln 12 variiert die Größe des radialen Gitteraustrittswinkels $\alpha_{T,r}$, wobei der radiale Strömungseintrittsquerschnitt $A_{T,r}$ zwischen benachbarten Leitschaufeln 12 als Funktion des radialen Gitteraustrittswinkels $\alpha_{T,r}$ ausgedrückt werden kann. In Sperrstellung des radialen Leitgitters 11 sind der radiale Strömungseintrittsquerschnitt $A_{T,r}$ und der radiale Gitteraustrittswinkel $\alpha_{T,r}$ Null, in maximaler Öffnungsstellung nehmen beide Werte ein Maximum ein.

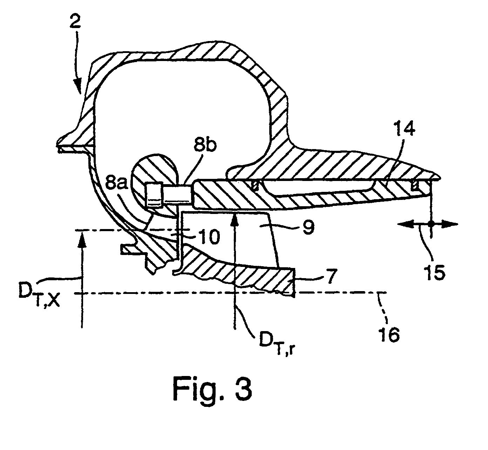

In der modifizierten Ausführung gemäß Fig. 3 ist die variable Turbinengeometrie der Turbine 2 als Axialschieber 14 ausgeführt, der in der radialen Zuströmung 8b angeordnet ist und dessen axiale Stellbewegung 15 zwischen Öffnungs- und Sperrstellung parallel zur Turbinenachse 16 verläuft. In der halbaxialen Zuströmung 8a ist ein Starrgitter 10 angeordnet. Je nach Position des Axialschiebers 14 teilen sich die Abgasmassenströme zwischen der halbaxialen und der radialen Zuströmung 8a bzw. 8b auf und treffen auf die Leitschaufeln 9 des Laufrades 7. Der mittlere Turbinen-Eintrittsdurchmesser $D_{T,m}$ bestimmt sich in gleicher Weise wie beim ersten Ausführungsbeispiel aus dem halbaxialen Turbinen-Eintrittsdurchmesser $D_{T,x}$, dem radialen Turbinen-Eintrittsdurchmesser $D_{T,x}$ sowie dem halbaxialen und dem radialen Strömungseintrittsquerschnitt $A_{T,x}$ bzw. $A_{T,r}$.

Es kann vorteilhaft sein, in der halbaxialen Zuströmung ein variables Leitgitter und in der radialen Zuströmung ein Starrgitter einzusetzen. In diesem Fall bleibt der radiale Strömungseintrittsquerschnitt $A_{T,x}$ konstant und der halbaxiale Strömungseintrittsquerschnitt $A_{T,r}$ ändert sich in Abhängigkeit der Stellung des Leitgitters. Der Minimalwert des Verhältnisses $D_v/D_{T,m}$ wird erreicht, wenn das Leitgitter in der halbaxialen Zuströmung geschlossen ist. Der Maximalwert wird in Öffnungsstellung des Leitgitters erreicht.

In einer weiteren Ausführung sind sowohl in der halbaxialen als auch in der radialen Zuströmung ein variables Leitgitter vorgesehen.

**Patentansprüche**

1. Abgasturbolader für eine Brennkraftmaschine, dessen Abgasturbine ein Laufrad mit mindestens einem halbaxialen und einem radialen Strömungseintrittsquerschnitt aufweist und mit einer variablen Turbinengeometrie zur veränderlichen Einstellung mindestens eines Strömungseintrittsquerschnitts versehen ist, und mit einem Verdichter, der mit dem Ansaugtrakt der Brennkraftmaschine verbindbar ist, wobei das Verhältnis $(D_v/D_{T,m})$ des Verdichter-Austrittsdurchmessers $(D_v)$ zum mittleren Turbinen-Eintrittsdurchmesser $(D_{T,m})$ je nach Einstellung der variablen Turbinengeometrie zwischen einem Minimalwert und einem Maximalwert variabel einstellbar ist,
   **dadurch gekennzeichnet,**

   - **daß** der Minimalwert kleiner als 1.1 ist und der mittlere Turbinen-Eintrittsdurchmesser $(D_{T,m})$ sich nach der Beziehung

   $$D_{T,m} = D_{T,x} + (D_{T,r} - D_{T,x}) * A_{T,r} /(A_{T,r} + A_{T,x})$$

   berechnet, worin

   $D_{T,x}$ den halbaxialen Turbinen-Eintrittsdurchmesser
   $D_{T,r}$ den radialen Turbinen-Eintrittsdurchmesser
   $A_{T,r}$ die Fläche des radialen Strömungseintrittsquerschnitts
   $A_{T,x}$ die Fläche des halbaxialen Strömungseintrittsquerschnitts

   bezeichnen,

   - **daß** das Verhältnis des halbaxialen Strömungseintrittsquerschnitts zum radialen Strömungseintrittsquerschnitt bei offenstehenden halbaxialen und radialen Strömungswegen etwa 0.1 beträgt.

2. Abgasturbolader nach Anspruch 1,
   **dadurch gekennzeichnet,**
   **daß** der Minimalwert des Verhältnisses $(D_v/D_{T,m})$ des Verdichter-Austrittsdurchmessers $(D_v)$ zum mittleren Turbinen-Eintrittsdurchmesser $(D_{T,m})$ kleiner als 1.0 ist.

3. Abgasturbolader nach Anspruch 1 oder 2,
   **dadurch gekennzeichnet,**
   **daß** der Minimalwert des Verhältnisses $(D_v/D_{T,m})$ des Verdichter-Austrittsdurchmessers $(D_v)$ zum mittleren Turbinen-Eintrittsdurchmesser $(D_{T,m})$ größer als 0.9 ist.

4. Abgasturbolader nach einem der Ansprüche 1 bis 3,
   **dadurch gekennzeichnet,**
   **daß** der Maximalwert des Verhältnisses $(D_v/D_{T,m})$ des Verdichter-Austrittsdurchmessers $(D_v)$ zum mittleren Turbinen-Eintrittsdurchmesser $(D_{T,m})$ zwischen 1.0 und 1.2 liegt.

5. Abgasturbolader nach einem der Ansprüche 1 bis 4,
   **dadurch gekennzeichnet,**
   **daß** als Sperrvorrichtung der variablen Turbinengeometrie ein radiales Leitgitter mit verstellbaren Leitschaufeln im Bereich des radialen Strömungseintrittsquerschnitts vorgesehen ist.

6. Abgasturbolader nach einem der Ansprüche 1 bis 4,
   **dadurch gekennzeichnet,**
   **daß** als Sperrvorrichtung der variablen Turbinengeometrie ein Axialschieber im Bereich des radialen Strömungseintrittsquerschnitts vorgesehen ist.

7. Abgasturbolader nach Anspruch 5 oder 6,
   **dadurch gekennzeichnet,**
   **daß** der Maximalwert des Verhältnisses $(D_v/D_{T,m})$ des Verdichter-Austrittsdurchmessers $(D_v)$ zum mittleren Turbinen-Eintrittsdurchmesser $(D_{T,m})$ bei geschlossener Sperrvorrichtung und der Minimalwert bei geöffneter Sperrvorrichtung erreichbar ist.

8. Abgasturbolader nach einem der Ansprüche 1 bis 4,
   **dadurch gekennzeichnet,**
   **daß** die Sperrvorrichtung der variablen Turbinengeometrie im Bereich des halbaxialen Strömungseintrittsquerschnitts angeordnet ist.

9. Abgasturbolader nach Anspruch 8,
   **dadurch gekennzeichnet,**

**daß** das Verhältnis ($D_V/D_{T,m}$) des Verdichter-Austrittsdurchmessers ($D_V$) zum mittleren Turbinen-Eintrittsdurchmesser ($D_{T,m}$) bei geschlossenem Axialschieber kleiner ist als bei geöffnetem Axialschieber.

**Claims**

1. An exhaust gas turbocharger for an internal combustion engine with an exhaust gas turbine which has a turbine wheel with a semi-axial and a radial flow inlet cross-section and is provided with a variable turbine geometry for the variable adjustment of at least one flow inlet cross-section, and with a compressor which is connected with the intake train of the internal combustion engine, it being possible to variably adjust the ratio ($D_V/D_{T,m}$) of the compressor outlet diameter ($D_V$) to the mean turbine inlet diameter ($D_{T,m}$) between a minimum value and a maximum value depending on the setting of the variable turbine geometry, **characterised in that**,

   - the minimum value is smaller than 1.1 and the mean turbine inlet diameter ($D_{T,m}$) is calculated in accordance with the relationship

   $$D_{T,m} = D_{T,x} + (D_{T,r} - D_{T,x}) *A_{T,r}/ (A_{T,r} + A_{T,x})$$

   where

   $D_{T,x}$    denotes the semi-radial turbine inlet diameter
   $D_{T,r}$    denotes the radial turbine inlet diameter
   $A_{T,r}$    denotes the area of the radial flow inlet cross-section
   $A_{T,x}$    denotes the area of the semi-axial flow inlet cross-section,

   - the ratio of the semi-axial flow inlet cross-section to the radial flow inlet cross-section when the semi-axial and radial flow paths are open is approximately 0.1.

2. An exhaust gas turbocharger in accordance with claim 1, **characterised in that**, the minimum value of the ratio ($D_V/D_{T,m}$) of the compressor outlet diameter ($D_V$) to the mean turbine inlet diameter ($D_{T,m}$) is less than 1.0.

3. An exhaust gas turbocharger in accordance with claim 1 or 2, **characterised in that**, the minimum value of the ratio ($D_V/D_{T,m}$) of the compressor outlet diameter ($D_V$) to the mean turbine inlet diameter ($D_{T,m}$) is greater than 0.9.

4. An exhaust gas turbocharger in accordance with one of claims 1 to 3, **characterised in that**, the maximum value of the ratio ($D_V/D_{T,m}$) of the compressor outlet diameter ($D_V$) to the mean turbine inlet diameter ($D_{T,m}$) lies between 1.0 and 1.2.

5. An exhaust gas turbocharger in accordance with one of claims 1 to 4, **characterised in that**, a radial guide row with adjustable guide blades is provided in the area of the radial flow inlet cross-section as a blocking device for the variable turbine geometry.

6. An exhaust gas turbocharger in accordance with one of claims 1 to 4, **characterised in that**, an axial slide is provided in the area of the radial flow inlet cross-section as a blocking device for the variable turbine geometry.

7. An exhaust gas turbocharger in accordance with claim 5 or 6, **characterised in that**, the maximum value of the ratio ($D_V/D_{T,m}$) of the compressor outlet diameter ($D_V$) to the mean turbine inlet diameter ($D_{T,m}$) can be achieved when the blocking device is closed and its minimum value can be achieved when the blocking device is open.

8. An exhaust gas turbocharger in accordance with one of claims 1 to 4, **characterised in that,** the blocking device for the variable turbine geometry is positioned in the area of the semi-axial flow inlet cross-section.

9. An exhaust gas turbocharger in accordance with claim 8, **characterised in that**, the ratio ($D_V/D_{T,m}$) of the compressor outlet diameter ($D_V$) to the mean turbine inlet diameter ($D_{T,m}$) is smaller when the axial slide is closed than when the axial slide is open.

**Revendications**

1. Turbocompresseur à gaz d'échappement pour un moteur à combustion interne, dont la turbine à gaz d'échappement comprend un rotor comportant une entrée d'écoulement présentant au moins une section transversale semi-axiale et une section transversale radiale et présentant une géométrie de turbine variable pour le réglage variable de l'une au moins des sections transversales d'entrée d'écoulement, et comportant un compresseur susceptible d'être relié au circuit d'aspiration du moteur à combustion interne, le rapport ($D_v/D_{T,m}$) entre le diamètre de sortie de compresseur ($D_v$) et le diamètre moyen d'entrée de turbine ($D_{T,m}$) étant réglable de façon variable entre une valeur minimale et une valeur maximale, en fonction du réglage de la géométrie de turbine variable,
**caractérisé en ce que**

- la valeur minimale est inférieure à 1,1 et le diamètre moyen d'entrée de turbine ($D_{T,m}$) se calcule suivant la relation

$$D_{T,m} = D_{T,x} + (D_{T,r} - D_{T,x})^* A_{T,r}/(A_{T,r} + A_{T,x})$$

dans laquelle

$D_{T,x}$    est le diamètre semi-axial d'entrée de turbine

$D_{T,r}$    est le diamètre radial d'entrée de turbine

$A_{T,r}$    est la surface de la section transversale radiale d'entrée d'écoulement,

$A_{T,x}$    est la surface de la section transversale semi-axiale d'entrée d'écoulement,

- le rapport entre la section transversale semi-axiale et la section transversale radiale d'entrée d'écoulement est d'environ 0,1, les trajets d'écoulement semi-axial et radial étant ouverts.

2. Turbocompresseur à gaz d'échappement selon la revendication 1, **caractérisé en ce que** la valeur minimale du rapport ($D_v/D_{T,m}$) entre le diamètre de sortie de compresseur ($D_v$) et le diamètre moyen d'entrée de turbine ($D_{T,m}$) est inférieure à 1,0.

3. Turbocompresseur à gaz d'échappement selon l'une ou l'autre des revendications 1 et 2, **caractérisé en ce que** la valeur minimale du rapport ($D_v/D_{T,m}$) entre le diamètre de sortie de compresseur ($D_v$) et diamètre moyen d'entrée de turbine ($D_{T,m}$) est supérieure à 0,9.

4. Turbocompresseur à gaz d'échappement selon l'une des revendications 1 à 3, **caractérisé en ce que** la valeur maximale du rapport ($D_v/D_{T,m}$) entre le diamètre de sortie de compresseur ($D_v$) et le diamètre moyen d'entrée de turbine ($D_{T,m}$) est comprise entre 1,0 et 1,2.

5. Turbocompresseur à gaz d'échappement selon l'une des revendications 1 à 4, **caractérisé en ce qu'**il est prévu à titre de dispositif de blocage de la géométrie de turbine variable une grille directrice radiale comportant des aubes directrices réglables dans la zone de la section transversale radiale d'entrée d'écoulement.

6. Turbocompresseur à gaz d'échappement selon l'une des revendications 1 à 4, **caractérisé en ce qu'**il est prévu à titre de dispositif de blocage de la géométrie de turbine variable un poussoir axial dans la zone de la section transversale radiale d'entrée d'écoulement.

7. Turbocompresseur à gaz d'échappement selon l'une ou l'autre des revendications 5 et 6, **caractérisé en ce que** la valeur maximale du rapport ($D_v/D_{T,m}$) entre le diamètre de sortie de compresseur ($D_v$) et le diamètre moyen d'entrée de turbine ($D_{T,m}$) peut être atteinte dans l'état fermé du dispositif de blocage et la valeur minimale peut être atteinte dans l'état ouvert du dispositif de blocage.

8. Turbocompresseur à gaz d'échappement selon l'une des revendications 1 à 4, **caractérisé en ce que** le dispositif de blocage de la géométrie de turbine variable est agencé dans la zone de la section transversale semi-axiale d'entrée d'écoulement.

9. Turbocompresseur à gaz d'échappement selon la revendication 8, **caractérisé en ce que** le rapport ($D_v/D_{T,m}$) entre le diamètre de sortie de compresseur ($D_v$) et le diamètre moyen d'entrée de turbine ($D_{T,m}$) dans l'état fermé du poussoir axial est inférieur à celui dans l'état ouvert du poussoir axial.

Fig. 1

Fig. 2

**Fig. 3**